Europäisches Patentamt

(19) European Patent Office

Office européen des brevets

(11) Publication number: **0 050 006**
**B1**

(12) **EUROPEAN PATENT SPECIFICATION**

(45) Date of publication of patent specification: **29.05.85**

(21) Application number: **81304663.8**

(22) Date of filing: **07.10.81**

(51) Int. Cl.⁴: **A 23 L 1/04, A 23 L 1/31**

(54) Thermo irreversible gelling system and edible materials based thereon.

(30) Priority: **09.10.80 GB 8032684**

(43) Date of publication of application:
**21.04.82 Bulletin 82/16**

(45) Publication of the grant of the patent:
**29.05.85 Bulletin 85/22**

(84) Designated Contracting States:
**AT BE CH DE FR IT LI LU NL SE**

(56) References cited:
**DE-A-2 836 140**
**FR-A-2 226 120**
**GB-A-2 032 243**
**GB-A-2 048 642**

(73) Proprietor: **Mars G.B. Limited**
**143-149 Fenchurch Street**
**London EC3M 6BN (GB)**

(72) Inventor: **Vernon, Alan John**
**151 Grange Drive**
**Melton Mowbray Leicestershire (GB)**
Inventor: **Cheney, Peter Arthur**
**173 Gynsill Lane**
**Anstey Leicestershire (GB)**
Inventor: **Stares, John**
**8 Solway Close**
**Melton Mowbray Leicestershire (GB)**

(74) Representative: **Day, Jeremy John et al**
**REDDIE & GROSE 16 Theobalds Road**
**London, WC1X 8PL (GB)**

Courier Press, Leamington Spa, England.

## Description

This invention relates to gelling systems and especially to gelling systems that can be used to produce edible materials having a pH below about 8.

Our co-pending British Patent Specification GB—A—2048642 describes and claims edible materials having a pH below 8 and having a thickened or gelled aqueous phase produced from a mixture or a reaction product of at least one glucomannan with at least one carrageenan.

That specification indicates that thermo-irreversible gels can be produced by reacting a mixture of at least one glucomannan and at least one carrageenan at a temperature of at least 100°C for a sufficient period of time provided that the pH is at least 5 but that in the presence of certain foodstuffs, especially meat and other proteinaceous materials the gels formed under the same conditions are thermo-reversible.

This invention is based on the observation that by suitably adjusting the conditions of gel formation thermo-irreversible gels can be produced, when the pH of the aqueous phase is between 5 and 8, whether or not the temperature is above 100°C and whether or not meats and other proteinaceous materials are present in the aqueous phase.

The invention is particularly based on the observation that thermo-irreversible gels can be produced using a carrageenan/glucomannan reaction system when the the pH is between 5 and 8 provided that the heat input is sufficient, even though the temperature of the system is not raised above 100°C and/or proteinaceous material of vegetable or animal origin is present.

This invention therefore relates to an edible food product having a pH between 5 and 8 wherein the aqueous phase is gelled in the form of a thermo-irreversible gel. The gel structure is provided by a mixture of at least one glucomannan and at least one carrageenan.

In a first embodiment the invention provides a process for making an edible material having a pH between 5 and 8 which comprises adding at least one glucomannan and at least one carrageenan to other edible ingredients and heating the thus prepared material at a temperature of at least 50°C but less than 100°C for a period of up to 16 hours to cause formation of a thermo-irreversible gelled aqueous phase in the material, the ratio of glucomannan to carrageenan being within the range cf from 20 to 1 to 1 to 20 and the total amount of glucomannan and carrageenan in the aqueous phase being from 0.01% to 5% by weight of the aqueous phase.

The heat input required to make a thermo-irreversible gel using the carrageenan-glucomannan gelling system of the invention depends on a number of factors. It appears to be essential that the pH is above 5 but apart from this the heat input can be lower, the closer the pH is to 6 and the higher the concentration of gellable constituents in the aqueous phase of the system. The higher the temperature, of course, the shorter the heating period required to form a thermo-irreversible gel.

Surprisingly, moreover, it has been found that the time to form a thermo-irreversible gel can be greatly reduced, when all other factors are the same, if the gelling system, having been produced by dissolving the ingredients in a hot aqueous phase, is cooled and subjected to an aging process at room temperature before it is reheated to forms the gel.

GB—A—2048642 moreover suggests that the presence of meats and other proteinaceous materials in glucomannan/carrageenan systems often leads to thermo-reversible gels. It has now been found that this is not caused by some inherent antagonism but by the effect such ingredients have on the process parameters which govern the conversion to a thermo-irreversible gel, such as pH, heat penetration ratio, potassium ion concentration etc.

In a second embodiment the invention provides a process for the production of a meat analogue having a pH between 5 and 8 comprising proteinaceous material dispersed in and bound together by a thermo-irreversible gelled aqueous phase which comprises dispersing the proteinaceous material, together with a gellable combination of at least one glucomannan and at least one carrageenan in water and heating the dispersion to a temperature of least 50°C for a period of up to 16 hours such to form a thermo-irreversible gel in the aqueous phase.

The invention moreover provides a meat analogue comprising proteinaceous material dispersed in and bound together by a thermo-irreversible gelled aqueous phase, wherein the gelling system comprises a mixture of at least one glucomannan and at least one carrageenan.

The edible product of this invention may be any foodstuff or confectionery in which it is desired to have a structured or shaped form which is resistant to structural breakdown upon heating. The gelled foodstuff may include flavouring, and colouring ingredients. If desired, humectants and fungistats may be included to provide microbiological stability in, for example, so-called "semi-moist" foods. A major advantage of the gelling system over other polysaccharide gelling systems such as alginates and polypectates is that there is no necessity for treatment with divalent or polyvalent ions, a process which often imparts a palatability negative to the product unless an efficient washing stage is included.

Another advantage of the gelling system over calcium alginates lies in the stability of the glucomannan/carrageenan gels to heating in the presence of polyphosphates. Food analogues structured by calcium alginate soften considerably when heated in the presence of polyphosphates whereas the products of this invention do not. This is particularly useful for meat analogues which are to be included in common convenience foods since these often contain polyphosphates.

Yet another advantage of the gelling system used in this invention is that it is odourless and flavourless even after severe heat treatment. This is in marked contrast to many vegetable protein binders such as the soya, cottonseed, and wheat proteins used in commerce. The gelling system of the invention does not therefore contribute a palatability negative to the foodstuff in which it is included.

Any carrageenan or carrageenan-type polysaccharide, for example, furcellaran is suitable. The carrageenan may be used in a crude form (e.g. washed seaweed) or in an alkaline modified form or in the form of the conventional carrageenan extracts of commerce. The carrageenan may be any form of carrageenan such as lambda, iota or kappa carrageenan or any mixture thereof, but the preferred carrageenan types are those containing some kappa carrageenan.

The glucomannans may be used in a purified form or in the crude form. The crude form may merely be the ground source of glucomannan without further treatment. Although any glucomannan is suitable, the preferred glucomannans are found in the corms of the Amorphophallus genus and in particular *A. rivieri* (Syn *A. Konjac), A. oncophyllus, A. variabilis, A. bulbifera* and *A. blumei.*

The preferred ratio of glucomannan to carrageenan is in the range 20:1 to 1:20 and the preferred concentration of the combined mixture in the aqueous phase is 0.01% to 5%, preferably 0.5 to 5% by weight.

The mechanism of thermo-irreversible gel formation in an aqueous solution of a mixture of glucomannan and carrageenan is still not fully understood.

The time for which the solution or gel must be heated to achieve thermo-irreversibility is dependent upon several factors, in particular pH, the gum content, the ageing period prior to heat treatment and the presence of other ingredients. All other factors being constant, the minimum time of heat treatment required to provide thermo-irreversibility reduced by higher pH, higher gum content, presence of synergistic ingredients (e.g. potassium ions or carob gum) or ageing (or conditioning) at room temperature prior to heat treatment. All other factors being constant the above changes will also provide tougher, more resilient gels or bound food products.

The following examples illustrate the invention.

Example 1

This example demonstrates the preparation of a typical thermally irreversible meat analogue product. The meat analogue product was prepared using the following recipe:—

| Ingredients | | % by weight |
|---|---|---|
| Meats | Fibrous Muscle Meats | 27.3 |
| | Offal Meats | 16.2 |
| | Ground Bone | 6.5 |
| Gravy | Amorphophallus sp. extract | 1.5 |
| | kappa—carrageenan | 1.0 |
| | Water | 47.5 |
| | | 100.0 |

The meats were coarsely chopped and then mixed in the proportions given above, before being minced through a 5 mm screen. The minced meats were then added to the correct proportion of water and the whole was then heated to 90°C with occasional stirring. When the mixture had attained a temperature of 90°C the gravy powders were added, using the proportions given above, while the mixture was thoroughly macerated using a high-shear stirrer. During the addition of the gravy powders the temperature of the mixture was kept in the range 90—95°C. When the gravy powders were evenly dispersed, the mixture was poured into an aluminium tray, covered and left to cool. When cool, the product was processed in a pressure cooker after which time the product was cooled.

When cool, the product was found to be tough, with a meaty appearance and could be cut cleanly into chunks with little or no fines being produced. The product resembled cooked lung.

The pH of the product was 6.4. The product was found to be thermally-irreversible when assessed in the following manner:—

The product was cut into cubes of side-length about 25 mm and 250 g of the cubes were placed in a metal can. The can was then filled with water and sealed before being processed in a pressure cooker at 130°C for one hour. The can was then cooled by immersion in cold, running water. When cool, the can was opened and the contents assessed. Thermo-irreversibility was confirmed since the chunks were still tough and discrete with clean surfaces after this treatment. Thermally-reversible chunks fuse together under the test conditions forming a single lump.

**0 050 006**

The structural integrity of the analogue is entirely due to the glucomannan and carrageenan present, since any contribution from the meats was destroyed by the 90°C pre-heat treatment.

Example 2

This example demonstrates the advantage of ageing the analogue mix prior to the heat forming process to improve the analogue toughness.

| | Ingredients | % by weight |
|---|---|---|
| Meats { | Fibrous Muscle Meats | 27.3 |
| | Offal Meats | 16.2 |
| | Ground Bone | 6.5 |
| Gravy { | Amorphophallus sp. extract | 0.75 |
| | kappa—carrageenan | 0.5 |
| | Water | 48.75 |
| | | 100.0 |

Using the above recipe the process of Example 1 was repeated up to and including the addition of the gums at 90° to 95°. When the gums were evenly dispersed, the mixture was split into two equal portions.

Product A

The hot mixture of one of the portions was poured into cans which were immediately sealed and transferred to a pre-heated autoclave. Without delay the cans and contents were heat sterilized at 130°C for 50 minutes after which time they were cooled to room temperature by immersing in cold water. This product had had no ageing prior to the heat setting process.

Product B

The hot mixture of the second portion was poured into cans which were sealed and left to cool to room temperature overnight. After 12 hours at room temperature, the cans and contents were heat sterilized in a similar manner to Portion A. This product has been aged prior to the heat setting process.

The meat analogues resulting from Portion A and Portion B were cut into chunks and subjected to the test for thermo-irreversibility and described in Example 1.

Chunks from Product A were fused together to form a single lump. Some chunk definition was evident within the lump but the chunks were weak.

Chunks from Product B were discrete, had clean surfaces and were tougher than the chunks from Product A. The pH of both products was 6.5.

Example 3

This example illustrates the preparation of a thermally irreversible meat analogue product using raw meats.

The product was prepared according to the following recipe:—

| | Ingredients | % by weight |
|---|---|---|
| | Fish | 50 |
| Gravy { | Water | 47.5 |
| | kappa—carrageenan | 1.0 |
| | Amorphophallus sp. extract | 1.5 |
| | | 100.0 |

The fish was chopped and then minced through a 5 mm screen.

The gravy was prepared separately, by firstly heating the water to a temperature of 90°C. The water was maintained at this temperature while the Amorphophallus sp. extract and the kappa carrageenan were

4

added and dispersed using a high shear mixer. When the powders were fully dispersed, the gravy was added to the minced fish and the resultant mixture was homogenized using a high shear mixer.

The product was then left to cool to room temperature before being processed in a pressure cooker at 110°C for one hour. The product was finally allowed to cool to room temperature before being assessed for appearance, pH, toughness and thermo-irreversibility.

The thermally-irreversible product was tough with a texture similar to a meat loaf, the fish being evenly dispersed throughout the pack. The pH of the product was 7.1.

Example 4

The example demonstrates the use of the glucomannan/carrageenan gel system to provide a meat analogue with high pet animal acceptance.

1. Analogue preparation

The following recipe was used:—

| Ingredient | % w/w |
|---|---|
| Liver | 12 |
| Offal Meats | 28 |
| Fibrous Muscle Meat | 16 |
| Hydrated TVP | 10 |
| Condensed Whey | 3 |
| Carob gum | 0.5 |
| Flavouring salts | 0.2 |
| Dye Solution | 0.7 |
| Water | 26.5 |
| | 96.9 |

The ingredients were mixed together and minced through a 4 mm plate.

The minced product was stirred using a low shear mixer whilst adding 1.5% Amorphophallus extract and 1.6% commercial grade kappa carrageenan ensuring that the gums were well dispersed. The resulting mixture was heated in an autoclave for one hour at 130°C in a suitable container.

After cooling, the solid pack was cut into chunks approximately 10 mm×7 mm×7 mm in size to provide the meat analogue.

2. Preparation of pet food

The following recipes were used:—

| Ingredients | Product A % w/w | Product B % w/w |
|---|---|---|
| Meat analogue (as above) | 70 | — |
| Gravy A | 30 | — |
| Raw Meat Mix (as in 1 above) | — | 97 |
| kappa Carrageenan (Commercial Grade) | — | 0.2 |
| Water | — | 2.8 |
| | 100.0 | 100.0 |

**0 050 006**

| Gravy A Ingredient | % w/w |
|---|---|
| Water | 87.5 |
| Liver | 12 |
| Dye Solution | 0.3 |
| Flavour | 0.2 |
| | 100.0 |

The liver and flavour salts were added to the gravy to ensure that in Product A, the concentrations of these palatable ingredients were similar to those in Product B.

Product A

The appropriate weight of chunks analogue was added to the cans and the cans were filled with Gravy A to give the correct ratio of chunks to gravy. The cans and contents were sealed.

Product B

All of the ingredients were mixed together and sealed in cans.

Both products were heat sterilized @ 130°C for one hour. After cooling to room temperature the cans were stored for one day at room temperature before opening to assess the contents. Samples of Product A and Product B were also fed to cats in a preference situation.

Product A consisted of tough, integral, well defined, chunks of meat in a weakly gelled gravy.

Product B consisted of a solid pack of minced meats embedded in a fairly tough clear thermo-reversible jelly.

To a human panel the chunks from Product A tasted similar to the Product B. There was no detectable flavour difference resulting from the inclusion of Amorphophallus extract and carrageenan as the binder system in Product A.

In Cat Preference trials, a panel of 40 felines ate both products with equal relish.

Example 5

This example demonstrates the use of hot gum dispersion to aid the development of thermo-irreversible glucomannan/carrageenan gels.

Two meat analogue materials were prepared:—
1. With gums mixed in the cold.
2. With gums mixed at elevated temperature.
Both had the following recipe:—

| Ingredient | % by weight |
|---|---|
| Offal Meats | 12.8 |
| Fibrous Muscle Meats | 22.0 |
| Ground Bone | 5.2 |
| Water | 57.5 |
| kappa—carrageenan | 1.0 |
| Amorphophallus sp. extract | 1.0 |
| | 100.0 |

For each meat analogue material, the meat constituents were roughly chopped, thoroughly mixed in their correct proportions and then minced employing the method illustrated in Example 1. The meat mix was then cooked by boiling in water for five minutes. The meats were strained, cooled to room temperature and employed in the following preparations:—

6

1. Cold gum dispersal

To 40 parts of the above meat mix 57.5 parts of water was added. The mixture was then thoroughly dispersed with a high shear mixer. The required weights of gums were then dispersed into the mix whilst continually shearing for 1—2 minutes. The mixture was then poured into cans, sealed and sterilized at 130°C for one hour.

2. Elevated temperature gum dispersal

To 40 parts of meat mix 57.5 parts of water was added.

The mixture was then heated to 90°C whilst continually stirring with a high shear mixer. The gums were then dispersed into the mix using a high shear mixer and maintaining the temperature at 90°C for 1—2 minutes. The mixture was then poured into cans, sealed and cooled to room temperature prior to being sterilized at 130°C for one hour.

Both samples 1 and 2 were allowed to cool to room temperature after sterilization, before being assessed for thermo-irreversibility employing the method illustrated in Example 1.

Upon examination of the meat analogue chunks after the thermo-irreversibility test, obvious differences were apparent.

1. Cold gum dispersal

Ths chunks had fixed together forming a continuous lump of meat and gel moulded to the shape of the can bottom. Gel had dissolved into the aqueous phase from the chunks producing a very viscous solution. The pH of the solid material was in the range of 6.30—6.38.

2. Hot gum dispersal

The chunks were completely integral retaining their original shape before the test. They were glossy and juicy in appearance. The pH of the chunks was in the range 6.38—6.40. Some excess gel had diffused from the chunks to the aqueous phase to form a viscous solution.

Example 6

This example illustrates the formation of thermo-irreversible gels employing a low temperature for a prolonged period of time.

Two 1 litre portions of gel were prepared having the following recipe:—

| Ingredient | % w/w |
|---|---|
| 1. Amorphophallus sp. extract | 1.500 |
| 2. kappa carrageenan | 1.000 |
| 3. $NaH_2PO_4 2H_2O$ | 0.382 |
| 4. $Na_2HPO4$ | 0.618 |
| 5. Water | 96.500 |
| | 100.000 |

The required quantity of water was taken for two litres of gel and heated to 90°C. The water was then mixed using a high shear stirrer and ingredients 3 and 4 added. Ingredients 1 and 2 were then added and mixing continued whilst maintaining a temperature of 90°C for five minutes. The solution was divided into two equal parts, each being poured into an aluminium tray, covered and allowed to cool.

One of the trays containing the gel was then heated to 76.5°C for a period of 16 hours, employing a constant temperature water bath and a thermocouple linked to a chart recorder to monitor the gel temperature. The gel was then allowed to cool to room temperature.

Both the heat treated and non heat treated gels were then assessed for thermo-irreversibility employing the method illustrated in Example I.

Chunks from the non heat treated gel had completely fused together forming one continuous lump at the bottom of the can. The pH of the gel was 6.85.

Chunks from the heat treated gel remained totally integral and retained their original shape. The chunks were tough and glossy in appearance. Some gum had diffused from the chunks into the aqueous phase but this was not excessive.

pH of chunks=7.01

Example 7

This example illustrates the effect of pH on the toughness of the thermally-irreversibility of the meat analogue product.

Two products were prepared using samples of offal meat from the same source. The products were prepared to the same recipe as that given in Example 3, except that the fish was replaced by the same proportion of offal meat.

The products were prepared in the same way as described in Example 3 except that prior to the addition of the gravy, the offal meat was treated with a suspension of calcium hydroxide in water to adjust the pH.

When the preparation of the products was complete, they were assessed for pH and toughness. Product (A) had a pH of 6.85 was thermo-irreversible and was markedly tougher than product (B) which had a pH of 5.65 and was thermo-reversible.

Example 8

This Example illustrates the minimum heat input required to produce a thermo-irreversible gel.

A pH 7.1 buffer solution was prepared by dissolving the following salts in distilled water.

| Ingredient | Wt/g | % w/w |
|---|---|---|
| $Na_2HPO_4$ | 49.44 | 0.618 |
| $NaH_2PO_4 . 2H_2O$ | 30.56 | 0.382 |
| Distilled Water | 7920.00 | 99.000 |
| | 8000.00 | 100.000 |

1 litre of pH 7.1 buffer solution was taken and heated to 90°C. The solution was then stirred employing a Silverson high shear mixer whilst maintaining the temperature at 90°C. 15 grams of konjac and 10 grams of carrageenan were then dispersed into the buffer solution and mixed thoroughly with the Silverson high shear mixer for a period of five minutes. During this time the solution temperature was maintained between 90—95°C, after which the solution was poured into an aluminium tray, covered and allowed to cool to room temperature. A number of trays were made up in this manner and these were each heated for a period of 16 hours at a different temperature.

Two methods of heating were employed:—

(i) 30—80°C using a constant temperature water bath. The aluminium tray was submerged in the water to the upper level of gel. The gel temperature was then allowed to equilibrate with that of the water.
(ii) 80—130°C using an Astell autoclave, vented to give temperatures up to 100°C maintaining atmospheric pressure and under elevated pressure to obtain temperatures up to 130°C.

The temperature of the gel was monitored in each case by means of a previously calibrated thermocouple linked to a twin channel short recorder. A second thermocouple was also employed to monitor the temperature of the heating environment. Timing at any given temperature was started at the point where the gel temperature was in equilibrium with the heating environment.

The following heating conditions were employed.

| Temperature °C | Time/hours |
|---|---|
| 100 | 16 |
| 85 | 16 |
| 76.5 | 16 |
| 65 | 16 |
| 61.5 | 16 |
| *50 | 16 |
| 41 | 16 |

The gels produced were assessed for thermo-irreversibility and toughness employing the following methods:

Toughness

The gels were measured for toughness employing an Instron food tester.

The Instron food tester was set up as follows:

Load cell         =50 Kg

Crosshead speed   =500 mm/minute

Chart speed       =1000 mm/minute

The gel from each of the solutions prepared was emptied from its tray and the subjective textural characteristics of the gel were noted.

Part of the gel was then cut into cubes having approximate side length of 15 mm. 85—90 g of these cubes were transferred into a modified Minnesota cell which included a 10 mm screen. The chunks were then extruded through the screen by means of a plunger which was attached to the Instron load cell. The average toughness value was taken as the maximun load from the Instron recorder trace obtained. This procedure was repeated for four 85—90 g. quantities of chunks and the average toughness value taken.

Thermo-irreversibility

The remaining part of the gel was taken and cut into chunks of approximately 1″ side. 250 g. of these chunks were placed in a steel can and the remaining volume made up with water. The can was then sealed and processed at 129°C for 59 minutes in an Astell autoclave. It was then allowed to cool to room temperature prior to opening.

A thermo-irreversible gel is confirmed if the gel chunks have retained their integral shapes and are not fused together.

A thermo-reversible gel is identified if the gel chunks have melted and fused together in the bottom of the can.

pH values of the gels were measured both before and after the test for thermo-irreversibility.

The results are illustrated in the following table:—

Results

| Temp. °C | Thermo-irreversibility | Colour | Toughness | pH |
|---|---|---|---|---|
| 100 | Yes | Opaque | 2.8 | 6.9 |
| 85 | Yes | Opaque | 4.7 | 7.0 |
| 76.5 | Yes | Opaque | 6.0 | 7.0 |
| 65 | Yes | Opaque | 8.0 | 7.0 |
| 61.5 | Yes | Opaque | 10.0 | 7.0 |
| *50 | Yes/No | Opaque | 9.0 | 7.0 |
| 41 | No | Translucent | 6.6 | 7.1 |

*Several experiments were carried out employing 50°C/16 hours heating conditions which produced in some cases, gels which were borderline in terms of thermo-irreversibility and in other cases gels where were thermo-reversible. It an be concluded that the minimum heat input for thermo-irreversibility lies at about 50°C/16 hours.

Example 9

In order to establish more clearly the effect of pH on the formation of thermo-irreversible gels in meat analogue materials a number of experiments were carried out using meats at natural pH and at an artificially adjusted neutral pH. For the majority of the experiments the formulation used was as follows:

**0 050 006**

| Meat | 50% by weight |
| Konjac | 1.5% by weight |
| Carrageenan | 1% by weight |
| Water | 47.5% by weight. |

For one experiment using lung the amount of meat was reduced to 40% by weight and the water content increased accordingly.

The required amount of water for 1 Kg. of product was taken and heated to 90°C. This was then stirred with a Silverson high shear mixer during the addition of the required quantities of konjac and carrageenan. Stirring was continued until a homogeneous mix was obtained.

The required weight of meat was taken and mixed thoroughly with the aqueous gel blend. The resulting mix was spread evenly into an aluminium tray and allowed to cool.

The materials in the tray were heated to a temperature of 110°C for a period of 60 minutes in an Astell laboratory autoclave. The trays were then allowed to cool prior to being tested for toughness, pH and thermo-irreversibility, using the methods described in Example 8.

Results

| Meat | Thermo-irreversibility | pH | Chunk toughness/Kg. |
|---|---|---|---|
| Meat trimmings | No | 5.7 | 6.15 |
| Liver trimmings | No | 5.7 | 5.1 |
| Liver trimmings | Yes | 6.4 | 8.7 |
| Fish | Yes | 7.1 | 13.4 |
| Kidney | Yes | 7.3 | 7.3 |
| Lung | Yes | 7.2 | 11.7 |

In those cases where the pH is below 6 and thermo-irreversibility is not achieved the meat is at its natural pH. In those cases where the pH is above 6.4 and thermo-irreversibility is achieved the pH was initially adjusted to 7—7.5 by the addition of calcium hydroxide.

The results illustrate that when meat is present in the konjac-carrageenan gelling system pH is an important factor in determining whether the gel will be thermo-irreversible or not.

**Claims**

1. A process for making an edible material having a pH between 5 and 8 which comprises adding at least one glucomannan and at least one carrageenan to other edible ingredients and heating the thus prepared material at a temperature of at least 50°C but less than 100°C for a period of up to 16 hours to cause formation of a thermo-irreversible gelled aqueous phase in the material, the ratio of glucomannan to carrageenan being within the range of from 20:1 to 1:20 and the total amount of glucomannan and carrageenan in the aqueous phase being from 0.01% to 5% by weight of the aqueous phase.

2. A process according to claim 1, wherein the gelling system is produced by dissolving the carrageenan and glucomannan in a hot aqueous phase which is then cooled and then reheated to form the thermo-irreversible gel.

3. A process according to claim 2, wherein before being reheated to form the thermo-irreversible gel the solution is held at room temperature for an aging period.

4. A process for the production of a meat analogue having a pH between 5 and 8 comprising proteinaceous material dispersed in and bound together by a thermo-irreversible gelled aqueous phase, which comprises dispersing the proteinaceous material together with a gellable combination of at least one glucomannan and at least one carrageenan in water and heating the dispersion to a temperature of at least 50°C for a period of up to 16 hours such as to form a thermo-irreversible gel in the aqueous phase.

10

5. A process according to claim 4, wherein the glucomannan and the carrageenan are dissolved in hot water and the proteinaceous material is then added and dispersed in the solution.

6. A process according to claim 4, wherein the proteinaceous material is dispersed in water and the glucomannan and carrageenan are added to the dispersion at an elevated temperature.

7. A process according to claim 5 or claim 6, wherein the mixture of proteinaceous material, glucomannan and carrageenan is allowed to cool before being reheated to form the thermo-irreversible gel.

8. A process according to claim 7, wherein before being reheated to form the gel, the mixture is held at room temperature for an aging period.

9. A process according to any one of claims 4 to 8, wherein the proteinaceous material at least partially consists of meat.

10. A process according to any one of claims 1 to 9, wherein the glucomannan is a glucomannan present in the corms of the Amorphophallus genus, especially a glucomannan derived from Amorphophallus rivieri, Amorphophallus oncophyllus, Amorphophallus, variabilis, Amorphophallus bulbifera or Amorphophallus blumei.

11. A process according to any one of claims 1 to 10, wherein the carrageenan is a carrageenan type containing at least some kappa carrageenan.

12. A process according to any one of claims 4 to 11, wherein the ratio of glucomannan to carrageenan is in the range of 20:1 to 1:20.

13. A process according to any one of claims 4 to 12, wherein the concentration of the mixture of glucomannan and carrageenan in the aqueous phase is from 0.01% to 5% by weight, preferably from 0.5% to 5% by weight.

14. A meat analogue comprising proteinaceous material dispersed in and bound together by a thermo-irreversible gelled aqueous phase, wherein the gelling system comprises a mixture of at least one glucomannan and at least one carrageenan.

15. A meat analogue according to claim 14 which contains proteinaceous material at least partially consisting of meat.

16. A meat analogue according to claim 14 or 15, which contains as glucomannan a glucomannan present in the corms of the Amorphophallus genus, especially a glucomannan derived from Amorphophallus rivieri, Amorphophallus oncophyllus, Amorphophallus variabilis, Amorphophallus bulbifera, or Amorphophallus blumei.

17. A meat analogue according to any one of claims 14 to 16, which contains as carrageenan a carrageenan type containing at least some kappa carrageenan.

18. A meat analogue according to any one of claims 14 to 17, which has a glucomannan to carrageenan ratio in the range of from 20:1 to 1:20.

19. A meat analogue according to any one of claims 14 to 18, which has a concentration of the mixture of glucomannan to carrageenan in the aqueous phase of from 0.01% to 5% by weight, preferably from 0.5% to 5% by weight.

**Patentansprüche**

1. Verfahren zur Herstellung einer eßbaren Substanz mit einem pH-Wert zwischen 5 und 8, das darin besteht, daß zumindest ein Gluromannan und zumindest ein Carrageenan anderen eßbaren Inhaltsstoffen zugesetzt und die so hergestellte Substanz bei einer Temperatur von mindestens 50°C aber weniger als 100°C bis zu 16 Stunden lang erhitzt wird, um die Bildung einer thermisch irreversibel gelierten wässrigen Phase in der Substanz zu verursachen, wobei das Verhältnis des Glucomannans zu dem Carrageenan in dem Bereich von 20:1 bis 1:20 liegt, und die Gesamtmenge an Glucomannan und Carrageenen in der wässrigen Phase 0,01 Gew.-% bis 5 Gew.-% der wässrigen Phase beträgt.

2. Verfahren nach Anspruch 1, wobei das Geliersystem hergestellt wird durch Auflösen des Carrageenans und Glucomannans in einer heißen wässrigen Phase, die hierauf abgekühlt und darnach wieder erhitzt wird, um das thermisch irreversible Gel zu bilden.

3. Verfahren nach Anspruch 2, wobei vor dem Wiedererhitzen zur Bildung des thermisch irreversiblen Gels die Lösung eine Zeitlang zum Reifen bei Raumtemperatur gehalten wird.

4. Verfahren zur Herstellung eines Fleischersatzes mit einem pH-Wert zwischen 5 und 8 bestehend aus einer Eiweißsubstanz in einer thermisch irreversibel gelierten wässrigen Phase dispergiert und durch sie gebunden, das darin besteht, daß die Eiweißsubstanz gemeinsam mit einer gelierbaren Kombination mindestens eines Glucomannans und mindestens eines Carrageenans in Wasser dispergiert und die Dispersion auf eine Temperatur von mindestens 50°C bis zu 16 Stunden lang erhitzt wird, um ein thermisch irreversibles Gel in der wässrigen Phase zu bilden.

5. Verfahren nach Anspruch 4, wobei das Glucomannan und das Caraageenan in heißem Wasser gelöst werden, und hierauf die Eiweißsubstanz zugefügt und in der heißen Lösung dispergiert wird.

6. Verfahren nach Anspruch 4, wobei die Eiweißsubstanz in Wasser dispergiert wird, und das Glucomannan und das Carrageenan zu der Dispersion bei erhöhter Temperatur zugefügt werden.

7. Verfahren nach Anspruch 5 oder 6, wobei die Mischung von Eiweißsubstanz, Glucomannan und

# 0 050 006

Carrageenan abgekühlen gelassen wird, bevor sie zur Bildung des thermisch irreversiblen Gels wieder erhitzt wird.

8. Verfahren nach Anspruch 7, wobei vor der Wiedererwärmung zur Bildung des Gels die Mischung eine Zeitlang zum Reifen bei Raumtemperatur gehalten wird.

9. Verfahren nach einem der Ansprüche 4 bis 8, wobei die Eiweißsubstanz zumindest teilweise aus Fleisch besteht.

10. Verfahren nach einem der Ansprüche 1 bis 9, wobei das Glucomannan ein Glucomannan ist, das in den Knollen der Gattung Amorphophallus vorkommt, insbesondere ein Glucomannan aus Amorphophallus rivieri, Amorphophallus oncophyllus, Amorphophallus variabilis, Amorphophallus bulbifera oder Amorphophallus blumei.

11. Verfahren nach einem der Ansprüche 1 bis 10, wobei das Carrageenan ein Carrageenan von der Art ist, die zumindest etwas Kappa-Carrageenan enthält.

12. Verfahren nach einem der Ansprüche 4 bis 11, wobei das Verhältnis des Glucomannans zum Carrageenan im Bereich 20:1 bis 1:20 liegt.

13. Verfahren nach einem der Ansprüche 4 bis 12, wobei die Konzentration der Mischung von Glucomannan und Carrageenan in der wässrigen Phase 0,01 Gew.-% bis 5 Gew.-%, vorzugsweise 0,5 Gew.-% bis 5 Gew.-%, beträgt.

14. Fleischersatz, bestehend aus einer Eiweißsubstanz, die in einer thermisch irreversibel gelierten wässrigen Phase dispergiert und durch sie gebunden ist, wobei das Geliersystem aus einer Mischung mindestens eines Glucomannans und mindestens eines Carrageenans besteht.

15. Fleischersatz nach Anspruch 14, der Eiweißsubstanz enthält, die zumindest teilweise aus Fleisch besteht.

16. Fleischersatz nach Anspruch 14 oder 15, der als Glucomannan ein Glucomannan enthält, das in den Knollen der Gattung Amorphophallus vorkommt, insbesondere ein Glucomannan aus Amorphophallus rivieri, Amorphophallus oncophyllus, Amorphophallus variabilis, Amorphophallus bulbifera oder Amorphophallus blumei.

17. Fleischersatz nach einem der Ansprüche 14 bis 16, der als Carrageenan ein Carrageenan von dem Typ enthält, der mindestens etwas Kappa-Carrageenan enthält.

18. Fleischersatz nach einem der Ansprüche 14 bis 17, das ein Verhältnis des Glucomannans zum Carrageenan im Bereich von 20:1 bis 1:20 aufweist.

19. Fleischersatz nach einem der Ansprüche 14 bis 18, der eine Konzentration der Mischung von Glucomannan und Carrageenan in der wässrigen Phase von 0,01 Gew.-% bis 5 Gew.-%, vorzugsweise von 0,5 Gew.-% bis 5 Gew.-%, aufweist.

## Revendications

1. Procédé de préparation d'une matière comestible avant un pH compris entre 5 et 8 dans lequel on ajoute au moins un glucomannane et au moins un carraghénane à d'autres ingrédients comestibles et on chauffe la matière ainsi préparée à une température d'au moins 50°C mais inférieure à 100°C pendant une période allant jusqu'à 16 h pour provoquer la formation d'une phase aqueuse gélifiée thermo-irréversible dans la matière, le rapport du glucomannane au carraghénane étant dans un intervalle allant de 20:1 à 1:20 et la quantité totale de glucomannane et de carraghénane dans lu phase aqueuse étant de 0,01% à 5% en poids de la phase aqueuse.

2. Procédé selon la revendication 1, où l'on produit le système gélifiant en dissolvant le carraghénane et le glucomannane dans une phae aqueuse chaude qu'on refroidit alors puis qu'on chauffe à nouveau pour former le gel thermo-irréversible.

3. Procédé selon la revendication 2, où avant de la chauffer à nouveau pour former le gel thermo-irréversible on maintient la solution à la température ambiante pendant une période de vieillissement.

4. Procédé de production d'un analogue de viande avant un pH compris entre 5 et 8 comprenant une matière protéique dispersée et liée par une phase aqueuse gélifiée thermo-irréversible, dans lequel on disperse la matière protéique avec une combinaison gélifiable d'au moins un glucomannane et au moins un carraghénane dans l'eau et on chauffe la dispersion à une température d'au moins 50°C pendant une période allant jusqu'à 16 h de manière à former un gel thermo-irréversible dans la phase aqueuse.

5. Procédé selon la revendication 4 où l'on dissout le glucomannane et le carraghénane dans l'eau chaude puis on ajoute la matière protéique et on la disperse dans la solution.

6. Procédé selon la revendication 4, où la matière protéique est dispersée dans l'eau et où l'on ajoute le glucomannane et le carraghénane à la dispersion à une température élevée.

7. Procédé selon les revendications 5 et 6, où on laisse refroidir le mélange de matière protéique, de glucomannane et de carraghénane avant de le chauffer à nouveau pour former le gel thermo-irréversible.

8. Procédé selon la revendication 7, où avant de le chauffer à nouveau pour former le gel, on maintient le mélange à la température ambiante pendant une période de vieillissement.

9. Procédé selon l'une quelconque des revendications 4 à 8, où la matière protéique se compose au moins partiellement de viande.

12

**0 050 006**

10. Procédé selon l'une quelconque des revendications 1 à 9, où le glucomannane est un glucomannane présent dans les bulbes du genre Amorphophallus, en articulier un glucomannane provenant d'Amorphophallus rivieri, Amorphophallus oncophyllus, Amorphophallus variabilis, Amorphophallus bulbifera ou Amorphophallus blumei.

11. Procédé selon l'une quelconque des revendications 1 à 10. où le carraghénane est un type de carraghénane contenant au moins une certaine quantité de kappa-carraghénane.

12. Procédé selon l'une quelconque des revendications 4 à 11, où le rapport du glucomannane au carraghénane est dans un intervalle de 20:1 à 1:20.

13. Procédé selon l'une quelconque des revendications 4 à 12, où la concentration du mélange de glucomannane et de carraghénane dans la phase aqueuse est d'environ 0,01% à 5% en poids, de préférence de 0,5% à 5% en poids.

14. Analogue de viande comprenant une matière protéique dispersée dans et liée par une phase aqueuse gélifiée thermo-irréversible, où le système gélifiant comprend un mélange d'au moins un glucomannane et au moins un carraghénane.

15. Analogue de viande selon la revendication 14 contenant une matière protéique au moins partiellement constituée de viande.

16. Analogue de viande selon les revendications 14 et 15, contenant comme glucomannane un glucomannane présent dans les bulbes du genre Amorphophallus, en particulier un glucomannane dérivé d'Amorphophallus rivieri, Amorphophallus oncophyllus, Amorphophallus variabilis, Amorphophallus bulbifera ou Amorphophallus blumei.

17. Analogue de viande selon l'une quelconque des revendications 14 à 16, contenant comme carraghénane un type de carraghénane contenant au moins une certaine quantité de kappa-carraghénane.

18. Analogue de viande selon l'une quelconque des revendications 14 à 17, qui a un rapport glucomannane:carraghénane dans l'intervalle allant de 20:1 à 1:20.

19. Analogue de viande selon l'une quelconque des revendications 14 à 18, qui a une concentration du mélange de glucomannane et de carraghénane dans la phase aqueuse allant de 0,01% à 5% en poids, de préférence de 0,5% à 5% en poids.

13